# EUROPEAN PATENT APPLICATION

(11) **EP 1 081 657 A2**
(43) Date of publication of application: **07.03.2001**
(21) Application number: 00118755.8
(22) Date of filing: 30.08.2000
(51) Int. Cl.: G06T 17/20

(54) **Automatic mesh generation method and system**

(30) Priority: 31.08.1999 JP 24476699
(71) Applicant: Hitachi, Ltd., Chiyoda-ku, Tokyo 101-8010 (JP)
(72) Inventor: Miyata, Kenji, c/o Hitachi, Ltd., Int. Prop. Group, Chiyoda-ku, Tokyo 100-8220 (JP); Maki, Kohji, c/o Hitachi, Ltd., Int. Prop. Group, Chiyoda-ku, Tokyo 100-8220 (JP)
(74) Representative: Strehl Schübel-Hopf & Partner

(57) **Abstract**

The stator spatial mesh 21 and the rotor spatial mesh 22 are prepared and in the air gap 4 between them, non-meshing whole mesh data is prepared. After the mesh data is input, in the calculator, inside the air gap 4, the layer mesh 23 in contact with the stator spatial mesh 21, or the layer mesh 24 in contact with the rotor spatial mesh 22, or both of them are formed and the residual air gap 40 is automatically divided into elements.

## Description

### BACKGROUND OF THE INVENTION

The present invention relates to an automatic mesh generation method for analyzing an air gap between a stator and a rotor of a rotary machine such as a generator or a motor, and an automatic mesh generation system using it.

When an electromagnetic field is to be analyzed using the numeral analysis method by the finite element method or others, it is necessary to divide the air space into elements in addition to body elements unlike the vibration analysis and strength analysis of a building.

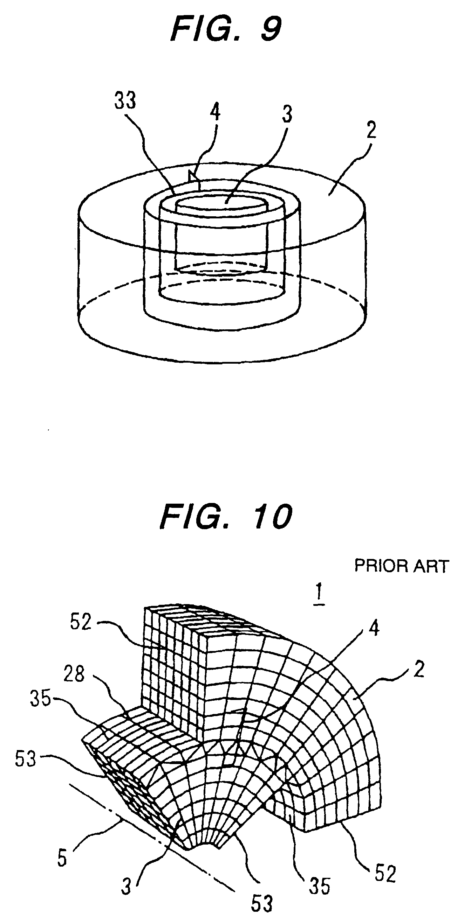

An analysis space 1 in the electromagnetic field analysis of a rotary machine is shown in Fig. 10. The analysis space 1 is composed of a stator space 2, a rotor space 3, and an air gap 4. In this case, the stator space 2 means a space including the stator, and the rotor space 3 means a space including the rotor, and hereinafter, the terms are used by this definition. The analysis space 1 shown in Fig. 10, as an example, in consideration of the periodicity in the rotational direction of the rotary machine, is shown as a case that only a part thereof can be divided into mesh and analyzed. Namely, in the stator space 2, the unknown variables (unknown variables used in the numerical analysis by the finite element method or others) concerning the physical values for describing the electromagnetic fields arranged in sections 52 in the rotational directions on both sides are connected to each other under the periodic boundary condition. Also in the rotor space 3, the unknown variables are connected to each other in sections 53 in the rotational directions on both sides under the periodic boundary condition. The rotor space is rotated by a degree against the stator space 2 in Fig. 10.

When the electromagnetic field of the analysis space 1 is to be analyzed, it is necessary to analyze it by rotating the rotor space 3 and as a suitable method, there is a method available for automatically dividing the air gap 4 between the stator space 2 and the rotor space 3 into elements every rotation. As a conventional method thereof, there is an MBM (moving band method) available. It is shown In a reference, A. Demenko; "Movement simulation in finite element analysis of electric machine dynamics", IEEE Transactions on Magnetics, Vol, 32, No. 3, (1996) pp. 1553 - 1556 and others.

### SUMMARY OF THE INVENTION

The MBM which is a conventional automatic mesh generation method for analyzing the air gap 4 between the stator space 2 and the rotor space 3 is a method for simply interchanging the node configuration for forming elements and in this case, the air gap 4 is separated into two areas in association with rotation. However, the separation surfaces 35, as shown in Fig. 10, must have a layer mesh 28 in the direction of the rotation axis which form layers (each cut line of the layers is perpendicular to the rotation axis) in the direction of the rotation axis 5. Therefore, the mesh structures on the surface of each of the stator space 2 and the rotor space 3 on the side of the air gap 4 are restricted so as to have layer meshes 28 in the direction that the same layers are formed in the direction of the rotation axis. As a result, when the rotary machine has a complicated structure, it is necessary to prepare a mesh for the stator space 2 and the rotor mesh 3 in consideration of the mesh structure of the air gap 4, so that a problem arises that a great deal of labor is required to prepare a mesh.

Accordingly, when the whole area of the air gap 4 is automatically divided into elements by a general automatic mesh generation method other than the MBM, the labor for mesh preparation concerning the stator space 2 and the rotor space 3 is greatly reduced. However, when the ordinary general automatic mesh generation method is used for the shape of elements generated the air gap 4, the whole mesh generation of the air gap 4 is changed every rotation and a problem arises that in the case of torque analysis, a numerical noise is easily included into the electromagnetic stress spatial integration calculation to be executed in the air gap 4.

An object of the present invention is to provide an automatic mesh generation method of the air gap 4 for realizing highly accurate torque analysis free from numerical noise and an automatic mesh generation system using it.

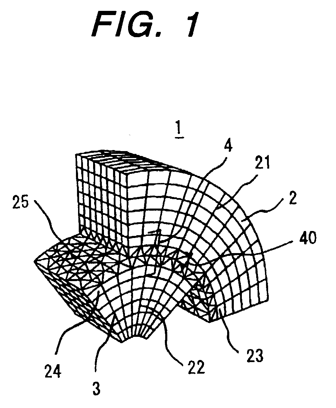

A means for accomplishing the aforementioned object will be explained by referring to Fig. 1. In the same way as with Fig. 10, also the analysis space 1 shown in Fig. 1, as an example, in consideration of the periodicity in the rotational direction of the rotary machine, is shown as a case that only a part thereof can be divided into mesh and analyzed. The analysis space 1 is composed of the stator space 2, the rotor space 3, and the air gap 4. The air gap 4 is positioned between the stator space 2 and the rotor space 3.

Firstly, a stator spatial mesh 21 and a rotor spatial mesh 22 are prepared, while there is no mesh in the air gap 4. After the mesh data is input, in the computer, inside the air gap 4, a layer mesh 23 in contact with the stator spatial mesh 21, or a layer mesh 24 in contact with the rotor spatial mesh 22, or both of them are formed and a residual air gap 40 is automatically divided into elements. Whenever the rotor space 3 rotates, only the residual air gap 40 is automatically divided into elements by the calculator.

In this case, the layer mesh means meshes which are laminated in layers. The term of "automatic mesh generation" used here, in the mesh generation in the air gap which is executed whenever the rotor space 3 rotates, means that the element shape is generally changed variously and elements are not always guaranteed to be constant. The layer mesh indicated here, in the sense that it is prepared by the calculator, belongs to the category of automatic mesh generation. However, a layer mesh Is structured by simply stacking up elements and the same layer mesh is used even if the rotor space 3 rotates, so that a constant shape is always guaranteed and it is not equivalent to "automatic mesh generation" in a narrow sense which is used for explanation of the present invention.

The air gap 4 may be the gap itself between a stator 6 and a rotor 7 of an actual rotary machine and in addition to it, it may be a part of the gap 4.

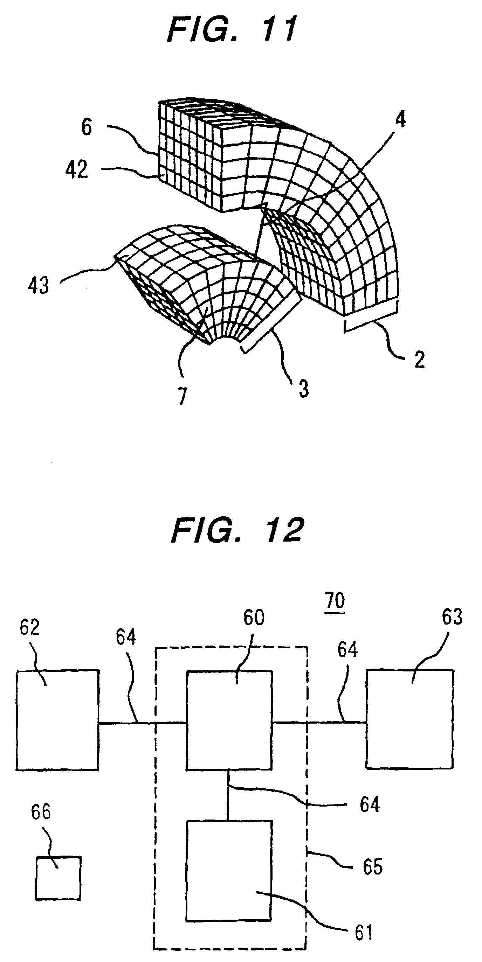

Namely, as shown in Fig. 11, the surfaces of the stator space 2 and the rotor space 3 on the side of the air gap 4 may include air spaces 42 and 43 as a part of the gap between the stator 6 and the rotor 7 of the actual rotary machine.

According to the aforementioned means, in the rotary movement of the rotor, the layer mesh can be used for analysis of the electromagnetic field as it is without changing the shape thereof, so that when the torque of the rotor is calculated in the layer mesh , the contribution to changes in the mesh shape in correspondence with rotation is suppressed smaller, and a numerical noise is hard to put in the electromagnetic stress spatial integration calculation necessary for torque calculation, and highly accurate torque calculation is made possible. At the same time, the air gap is automatically divided into elements, so that the stator space and rotor space can be independently divided into mesh and the labor of mesh preparation is greatly reduced. The layer mesh which is a torque calculation area is formed by simply stacking up meshes in layers, so that the air gap can be divided into mesh faster than the automatic mesh generation of the whole air gap.

### BRIEF DESCRIPTION OF THE DRAWINGS

Fig. 1 is a drawing showing the condition of mesh generation of a rotary machine obtained by the automatic mesh generation method of the present invention;
Figs. 2a to 2d are a drawing showing a process of automatic mesh generation of the first embodiment of the present invention;
Fig. 3 is a flow chart showing a process of automatic mesh generation of the first embodiment of the present invention;
Figs. 4a to 4d are a drawing showing a process of automatic mesh generation of the second embodiment of the present invention;
Fig. 5 is a flow chart showing a process of automatic mesh generation of the second embodiment of the present invention;
Fig. 6 is a drawing showing the constitution method of the tetrahedral element 51 in the second embodiment of the present invention;
Fig. 7 is a drawing showing the curved surface 33 as a substitute for the cylindrical surface 30 in the second embodiment of the present invention;
Fig. 8 is a drawing showing the curved surface 33 as a substitute for the cylindrical surface 30 in the second embodiment of the present invention;
Fig. 9 is a drawing showing the curved surface 33 as a substitute for the cylindrical surface 30 in the second embodiment of the present invention;
Fig. 10 is a drawing showing the conventional method;
Fig. 11 is a drawing showing another concept on the stator space and rotor space;
Fig. 12 is a block diagram showing an example of an automatic mesh generation system for executing the automatic mesh generation method of the present invention;
Fig. 13 is a drawing showing an example of an automatic mesh generation system for executing the automatic mesh generation method of the present invention.

### DETAILED DESCRIPTION OF THE PREFERRED EMBODIMENTS OF THE INVENTION

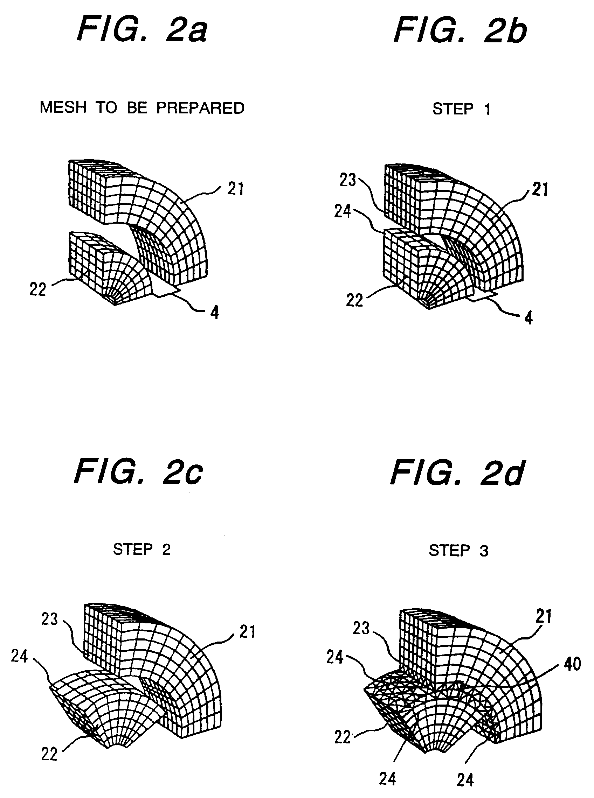

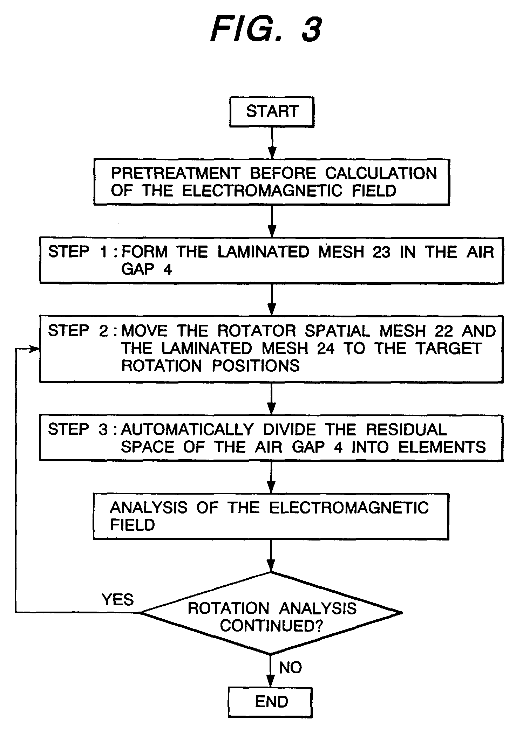

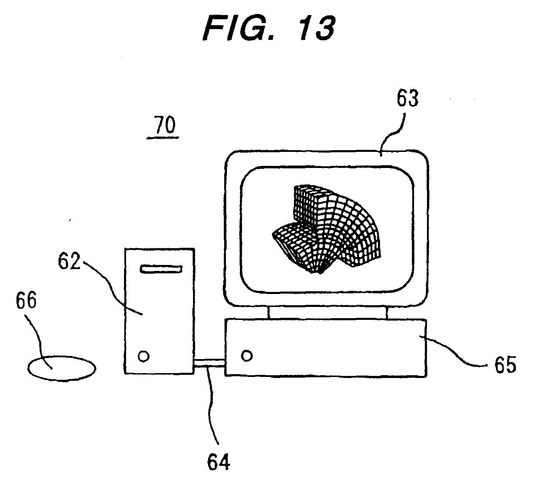

Figs. 2 and 3 show an automatic mesh generation method as an embodiment of the present invention. In Figs. 12 and 13, an automatic mesh generation system 70 for executing the automatic mesh generation method of this embodiment is shown.

Fig. 2 shows a process of automatic mesh generation of the air gap 4 by the automatic mesh generation method in this embodiment and Fig. 3 shows a flow chart thereof. Firstly, as shown in Fig. 2a, the air gap 4 is not meshed and the stator spatial mesh 21 and the rotor spatial mesh 22 are prepared. In the same way as with Fig. 1, in consideration of the periodicity in the rotational direction of the rotary machine, as an example, a case that only the 1/4 part can be divided into mesh and analyzed is shown.

As shown in Fig. 3, after start of the operation of the analysis program, the system executes the pretreatment for calculation of the electromagnetic field, that is, reads input information concerning mesh generation of the analysis space except the air gap and executes preparation for analysis. Thereafter, the system executes the processes of Step 1 to Step 3 and automatically divides the air gap into elements. Then, the system executes the electromagnetic field analysis. Next, the processes of Step 1 to Step 3 will be explained.

### Step 1:

As shown in Fig. 2b, the layer mesh 23 is formed in the stator spatial mesh 21 and the layer mesh 24 is formed in the rotor spatial mesh 22. In this example, a case that layer mesh es 23 and 24 in one layer are formed respectively is shown. Layer meshes may be formed with several meshes.

### Step 2:

The rotor spatial mesh 22 and the layer mesh 24 are moved to the target rotation positions.

### Step 3:

The air gap 40 which is a residual space of the air gap 4 is divided into meshes by an ordinary automatic mesh generation method. In this case, automatically generated meshes have a plurality of layers and may have an irregular three-dimensional structure.

By the aforementioned steps, the mesh generation of the air gap 4 is completed. When analysis is to be made continuously by rotating the rotor, the system returns to Step 2 and it executes Steps 2 and 3 and the layer mesh generation at Step 1 may be executed only at first.

According to this embodiment, since at all the analysis steps, the layer mesh 24 in a fixed shape is used, when an integration area is installed in the layer mesh 24 in a fixed shape and the torque acting the rotor is obtained in the torque analysis of the rotary machine, there is an effect produced that a numerical noise is hard to be included in the obtained torque and highly accurate analysis is made possible. The reason is that in the case of torque analysis, although the Maxwell stress method or nodal force method is generally used, the two methods require an integration over a certain cylindrical surface in the air gap 4 or elements accompanying the cylindrical surface, so that a numerical noise is generated when the elements as the integration region are changed every rotation. With keeping this highly accurate analytical characteristic, both the stator space 2 and the rotor space 3 can be divided into elements independently without considering the one another's mesh structure, so that there is an effect produced that the labor of mesh preparation is greatly reduced and the time of whole analysis from modeling to obtaining of analytical results can be shortened greatly. The layer mesh as is a torque calculation area is formed by simply stacking up meshes in layers, so that the air gap can be divided into elements faster than the automatic mesh generation of the whole air gap.

The automatic mesh generation system 70 shown in Figs. 12 and 13 will be explained hereunder. The automatic mesh generation system 70 in this embodiment is composed of an information processor 60 for executing the calculation on the basis of the automatic mesh generation method in this embodiment, a storage unit 61 for storing the calculation function and calculation results, a display unit 63 for displaying mesh generation results or analysis results of the electromagnetic field using generated mesh, and signal lines 64 for connecting each unit.

When applicable, an external data processor 62 for receiving input data from another recording medium is included. The information processor 60 transfers information with the storage unit 61, the display unit 63, and the external data processor 62 using the signal lines 64 and manages the control of the system. The calculation processing function of the automatic mesh generation method of the present invention is stored in a recording medium 66 such as a floppy disk or CD-ROM as analysis software, inserted into the external data processor 62, and stored in the storage unit 61. The calculation function described in the analysis software is executed by the information processor 60, and automatic mesh generation results using it or analytical results of the electromagnetic field by using the generated mesh are displayed in the display unit 63, and hence the automatic mesh generation method according to the present invention can be used for the analytical process.

It is possible to widelly use the analysis software including the calculation processing function of the automatic mesh generation method of the present invention stored in a recording medium 66 such as a floppy disk or CD-ROM in the automatic mesh generation system 70.

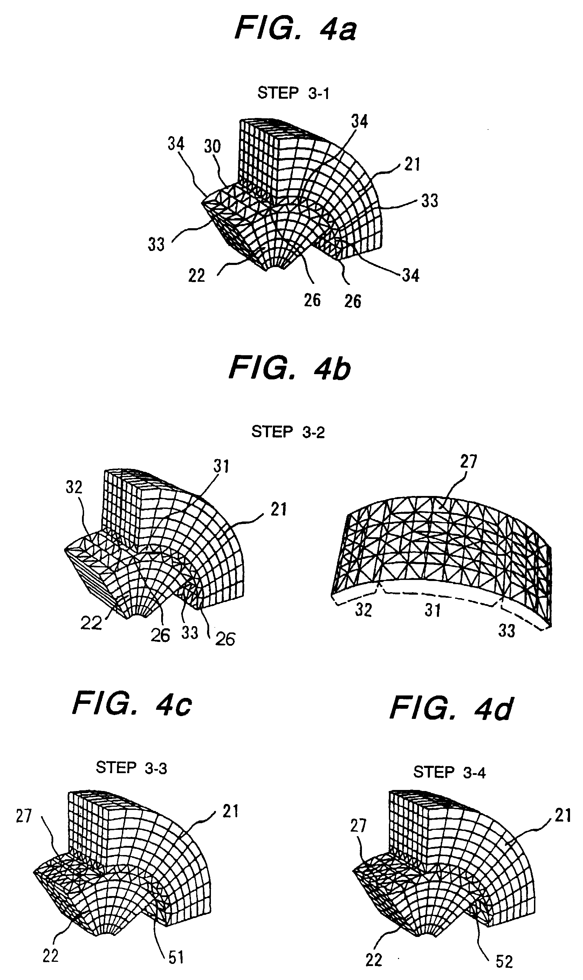

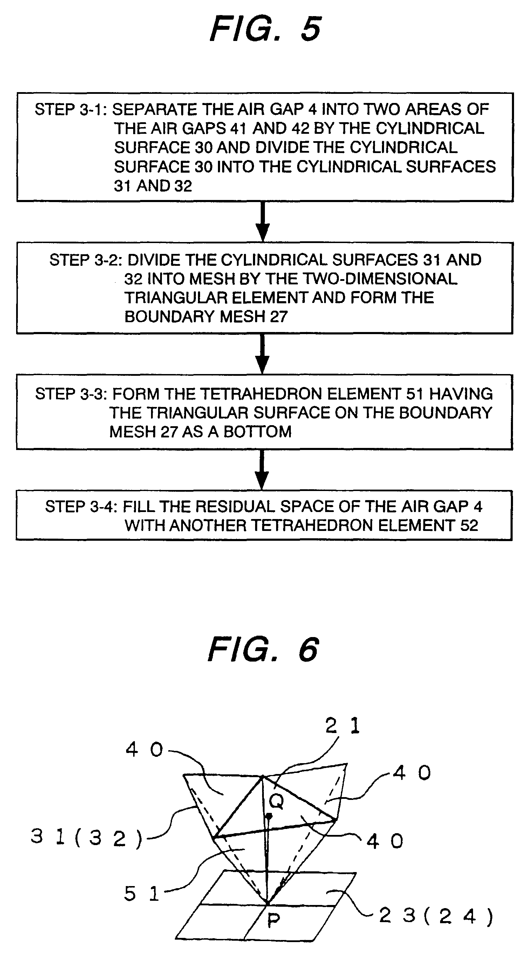

The second embodiment of the present invention will be explained by referring to Figs. 4 and 5. This embodiment, with respect to the automatic mesh generation method at Step 3 of the first embodiment, indicates a high-speed automatic mesh generation method which is different from an ordinary automatic mesh generation method. Fig. 4 shows the process of the automatic mesh generation at Step 3 and Fig. 5 shows the flow chart thereof. The mesh generation is executed according to the following steps.

### Step 3-1:

In the space of the residual air gap 40 which is not divided into mesh, a cylindrical surface 30 is set. A top mesh 26 is formed by using tetrahedral elements and or pyramidal elements, vertices of which are points projected in the radial direction from certain points(for example, center points) on each element surface of layer meshes 23 and 24 prepared at step 1 of the first embodiment. The constituent elements of the top mesh 26 are tetrahedral elements when the surface elements of the layer mesh es 23 and 24 form a triangle and pyramidal elements when the surface elements form a quadrilateral. With respect to the elements neighboring with a boundary line 33 of the layer mesh 23, the vertex formed on the cylindrical surface 30 is moved to boundary line 34 of the periphery surrounding the cylindrical surface 30.

### Step 3-2:

The curved surface with which the stator spatial mesh 21 and the rotor spatial mesh 22 are directly in contact is a cylindrical surface 31 and the curved surfaces with which they are indirectly in contact under periodical boundary conditions are cylindrical surfaces 32 and 33. Using the vertexes on the cylindrical surface 30 prepared at Step 3-1 mentioned above, on the cylindrical surface 31 and the cylindrical surfaces 32 and 33, for example, by the two-dimensional Delaunay method, a cylindrical surface mesh 27 in a two-dimensional triangular shape is formed. The unknown variables (unknown variables used for numerical analysis of the finite element method or others) concerning the physical values for describing the electromagnetic fields arranged on the cylindrical surface 32 and the cylindrical surface 33 are connected to each other under the periodical boundary condition, so that the cylindrical surface 32 and the cylindrical surface 33 have the same mesh structure. Therefore, the two areas of the cylindrical surface 31 and the cylindrical surface 32 are automatically divided into two-dimensional elements. The cylindrical surface mesh 27 of the cylindrical surface 33 is copied to make the cylindrical surface mesh 27 of the cylindrical surface 33.

There are two kinds of cylindrical surfaces 32 and 33 available such as a rotationally symmetrical system that the cylindrical surface 32 rotates and moves in the rotational direction of the rotor and can completely coincide with the mesh of the cylindrical surface 33 and a rotationally unsymmetrical system that the cylindrical surface 32 is reversed in the direction of the rotation axis round the center in the direction of the rotation axis, then rotates and moves in the rotational direction of the rotor, and can completely coincide with the mesh of the cylindrical surface 33. Therefore, it is necessary to use them appropriately according to the analytical object.

### Step 3-3:

A tetrahedral element 51 having the cylindrical surface mesh 27 formed at Step 3-2 as a bottom is structured. An example relating to the constitution method of the tetrahedral element 51 in this case will be explained by referring to Fig. 6. From a node P on the surface of each of the layer mesh es 23 and 24, a projected point Q is installed on each of the cylindrical surfaces 31 and 32 in the radial direction and using triangular elements 40 including the point Q inside and the point P, a tetrahedral element 51 is structured. This operation is performed for all the nodes positioned on the surface of each of the layer mesh es 23 and 24. However, the nodes on the boundary line are excluded. Even when this series of operation is completed, with respect to the triangular element 40 which is not used for constitution of the tetrahedral element 51, among the vertexes P of the tetrahedral element 51 neighboring with it, the one nearest to the triangular element 40 is selected and the tetrahedral element 51 is structured using the vertex P.

### Step 3-4:

The residual space of the air gap 40 which is not filled at Step 3-3 is filled with another tetrahedral element 52.

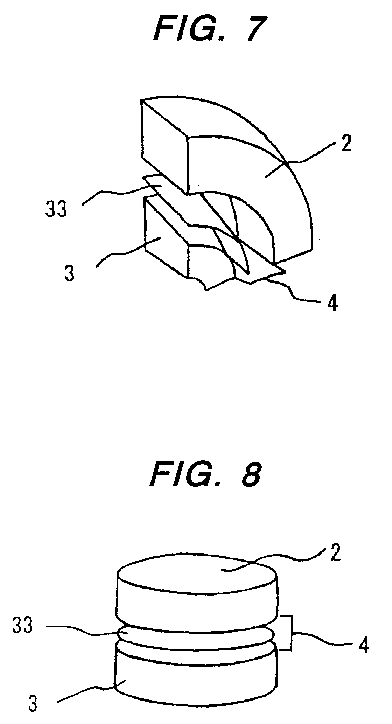

According to this embodiment, compared with a general-purpose three-dimensional automatic mesh generation method, there is an effect produced that the air gap can be automatically divided into elements at high speed. In this embodiment, to divide the air gap into two parts, the cylindrical surface 30 is used. More generally, when a plurality of circular arcs with the rotation axis set as a center axis are arranged in the direction of the rotation axis or the direction of the rotation radius and the curved surface 33 formed by connecting them is used, as shown in Figs. 7 and 8 or 9, it can correspond to a rotary machine within a wider range.

According to the present invention, there are effects produced that since highly accurate analysis of torque can be realized and at the same time, the rotor space and stator space can be independently divided into mesh, the labor of mesh preparation can be reduced greatly and furthermore the air gap can be automatically divided into elements at high speed.

## Claims

1. An automatic mesh generation method for analyzing an electromagnetic field of a rotary machine by numerical calculation of the finite element method or others, wherein an air gap between a stator and a rotor is to be divided into meshes, from a surface in contact with said air gap of said stator or said rotor or both of the same toward said air gap, and a layer mesh of one layer or a plurality of layers is formed respectively, and a space in a residual air gap is automatically divided into meshes having a plurality of layers.

2. An automatic mesh generation method according to Claim 1, wherein a shape of said layer mesh formed on said surface in contact with said air gap of said stator or said rotor is kept unchanged and only said space in said residual air gap is automatically divided into elements every rotation movement of said rotor.

3. An automatic mesh generation method according to Claims 1, wherein by a curved surface formed by connecting a plurality of circular arcs with the rotation axis set as a center which are arranged in the direction of the rotation axis, or a curved surface formed by connecting a plurality of circular arcs with the rotation axis set as a center which are arranged in the radial direction, or a curved surface formed by both of the same, said residual air gap is separated into two spaces and divided into elements respectively.

4. An automatic mesh generation method according to Claim 1, wherein a shape of said layer mesh formed on said surface in contact with said air gap of said stator or said rotor is kept unchanged and only said space in said residual air gap is automatically divided into elements every rotation movement of said rotor and wherein by a curved surface formed by connecting a plurality of circular arcs with the rotation axis set as a center which are arranged in the direction of the rotation axis, or a curved surface formed by connecting a plurality of circular arcs with the rotation axis set as a center which are arranged in the radial direction, or a curved surface formed by both of the same, said residual air gap is separated into two spaces and divided into meshes respectively.

5. An automatic mesh generation method according to Claim 1, wherein a plurality of circular arcs with the rotation axis set as a center are arranged in the direction of the rotation axis and a curved surface formed by connecting the same is a cylindrical surface and a plurality of circular arcs with the rotation axis set as a center are arranged in the radial direction and a curved surface formed by connecting the same is a disk, and said residual air gap is separated into two spaces and divided into elements respectively.

6. An automatic mesh generation method according to Claim 1, wherein by a curved surface formed by connecting a plurality of circular arcs with the rotation axis set as a center which are arranged in the direction of the rotation axis, or a curved surface formed by connecting a plurality of circular arcs with the rotation axis set as a center which are arranged in the radial direction, or a curved surface formed by both of the same, said residual air gap is separated into two spaces and divided into elements respectively, and wherein a plurality of circular arcs with the rotation axis set as a center are arranged in the direction of the rotation axis and a curved surface formed by connecting the same is a cylindrical surface and a plurality of circular arcs with the rotation axis set as a center are arranged in the radial direction and a curved surface formed by connecting the same is a disk.

7. An automatic mesh generation method according to Claims 1, wherein by a curved surface formed by connecting a plurality of circular arcs with the rotation axis set as a center which are arranged in the direction of the rotation axis, or a curved surface formed by connecting a plurality of circular arcs with the rotation axis set as a center which are arranged in the radial direction, or a curved surface formed by both of the same, said residual air gap is separated into two spaces and divided into elements respectively, and wherein said curved surface for separating said residual air gap other than one or two layer mesh es into two spaces is two-dimensionally divided into elements, and elements are formed by directly connecting nodes for forming surface elements and nodes for forming surface elements of said layer mesh stated in Claims 3 and 4 on the side of said air gap, and said space of said residual air gap is filled with said elements.

8. An automatic mesh generation system comprising an information processor for executing calculation on the basis of said automatic mesh generation method stated in any of Claims 1 to 5, a storage unit storing a calculation function, and a display unit for displaying automatic mesh generation results.

9. An automatic mesh generation system providing a storage medium to store calculation processing function based on the automatic mesh generation method stated in any of Claims 1 to 8.

10. A storage medium storing a program being capable of executing the automatic mesh generation method stated in any of Claims 1 to 8.

11. A program product being capable of executing the automatic mesh generation method stated in any of Claims 1 to 8 on a computer.
